Europäisches Patentamt

European Patent Office

Office européen des brevets

(11) Veröffentlichungsnummer : **0 497 751 B1**

(19)

(12) **EUROPÄISCHE PATENTSCHRIFT**

(45) Veröffentlichungstag der Patentschrift :
21.09.94 Patentblatt 94/38

(51) Int. Cl.⁵ : **F16D 69/02**

(21) Anmeldenummer : **92890006.7**

(22) Anmeldetag : **15.01.92**

(54) **Harzgebundene Reibbelagmischung mit einem Festschmierstoffzusatz.**

(30) Priorität : **28.01.91 AT 178/91**

(43) Veröffentlichungstag der Anmeldung :
**05.08.92 Patentblatt 92/32**

(45) Bekanntmachung des Hinweises auf die
Patenterteilung :
**21.09.94 Patentblatt 94/38**

(84) Benannte Vertragsstaaten :
**DE DK ES FR GB NL**

(56) Entgegenhaltungen :
**PATENT ABSTRACTS OF JAPAN vol. 12, no.
353 (C-530)21. September 1988; &
JP-A-63109131
PATENT ABSTRACTS OF JAPAN vol. 12, no.
143 (C-492)30. April 1988; & JP-A-62260030**

(73) Patentinhaber : **CHEMSON
POLYMER-ADDITIVE GESELLSCHAFT M.B.H.
A-9601 Arnoldstein (AT)**

(72) Erfinder : **Buxbaum, Lothar, Dr.
Emailwerkstrasse 14
A-9523 Landskron (AT)**

(74) Vertreter : **Collin, Hans, Dipl.-Ing. Dr. et al
Patentanwälte
Dipl.-Ing. Dr. Hans Collin
Dipl.-Ing. Erwin Buresch
Dipl.-Ing.Armin Häupl
Mariahilferstrasse 50
A-1070 Wien (AT)**

## Beschreibung

Die Erfindung betrifft Reibbelagmischungen mit einem Festschmierstoffzusatz, mit dem der Reibungskoeffizient und Verschleiß gezielt eingestellt werden kann. Dieser Zusatz kann vorteilhaft in asbestfreien und bleifreien Reibbelagmischungen in hochbelasteten Reibpaaren wie sie in Bremsen, Kupplungen, Synchrongetrieben etc. vorkommen, eingesetzt werden.

Im allgemeinen müssen die Reibmaierialien in der Automobilindustrie folgende Eigenschaften besitzen: Der Reibungskoeffizient muß der speziellen Aufgabe angepaßt und über einen großen Bereich von Geschwindigkeiten und Temperaturen unabhängig von der Form und dem Alter des Materials stabil sein. Besonders wichtig ist es, daß der Reibwert auch nach extremen Temperaturbelastungen in der Kälte annähernd wieder seinen ursprünglichen wert annimmt. Dieser Wert soll bei Scheibenbremsbelägen über 0,35 liegen. Das Reibmaterial darf sich nur wenig abnützen, darf aber andererseits die Bremsscheibe nicht stark angreifen. Um gute Komforteigenschaften zu gewährleisten dürfen keine Geräusche auftreten, die Empfindlichkeit gegenüber Feuchtigkeit muß möglichst gering sein. Darüberhinaus müssen sich solche Reibbeläge auch mit vertretbaren Kosten industriell herstellen lassen.

Es ist äußerst schwierig alle Anforderungen an ein Reibmaterial zu erfüllen. Aus diesem Grund haben sich verschiedene Reibmaterialsysteme entwickelt, die dann für jeweils bestimmte Anwendungsgebiete optimal sind.

Reibbeläge aus reinem Kohlenstoff (oft kohlefaserverstärkt) sind von der Zusammensetzung her einfach und werden häufig für Flugzeugbremsen eingesetzt. Erste Versuche dieses System für PKW-Scheibenbremsen einzusetzten sind vielversprechend.

Keramische Reibbeläge sind schon einige Zeit bekannt, konnten sich aber bisher nicht durchsetzen. Neuere Arbeiten auf diesem Gebiet lassen es jedoch möglich erscheinen,längerfristig PKW-Reibbeläge auf Keramik-Basis zum Einsatz zu bringen.

Sintermetalle sind eine weitere Basis für Reibmaterialien. Auf dieser Basis werden verschiedene Arten von Brems- und Kupplungsbelägen hergestellt; verschiedene Zusätze aus dem Bereich der Metallverformung haben sich als Hilfsstoffe bewährt.

Die kostengünstigste Art, Reibmaterialien herzustellen,ist auf Basis von Kunstharzen. Der Großteil der PKW- und LKW-Beläge wird heute auf Basis von Kunstharzen hergestellt. Als Kunstharze werden hauptsächlich Harze auf Phenol und Kresolbasis eingesetzt, die je nach Anwendung Thermoplast- oder Kautschuk-modifiziert sein können. Um die Kunstharze den verschiedenen Anforderungen der Praxis anzupassen, müssen jedoch eine ganze Reihe anorganischer Zusätze wie Metalle, mineralische Fasern und verschiedene weitere anorganische Füllstoffe und Additive zugesetzt werden.

Bei den verstärkend und füllend wirkenden Stoffen wird heute kaum mehr Asbest verwendet. sondern an dessen Stelle anorganische oder organische Fasern wie z.B. Kohlenstoff- oder Aramidfasern bzw. Metalle in Pulver- Span- oder Faserform. Auch verschiedene Mineralfasern und verschiedene Formen von Glimmer kommen zur Anwendung. Als Füllstoff wird hauptsächlich Bariumsulfat oder verschiedene Tonerden verwendet.

Die reibwertaktiven Füllstoffe sollen die Höhe des Reibwertes beeinflussen, für ein weitgehendes Gleichbleiben dieses Reibwertes bei verschiedenen Temperaturen sorgen und einen zu raschen Verschleiß des Reibbelags und des Gegenmaterials verhindern. Darüberhinaus sollen sie positiv auf die Geräuschentwicklung beim Bremsvorgang einwirken.

In diesem Zusammenhang wird auf "Friction Materials", Chemical Technology Review No. 100 Noyes Data Corporation, USA 1978 als relevanter Stand der Technik und als relevante Offenbarung bezug genommen.

Eines der wichtigsten praktisch verwendeten Gleitmittel ist Bleisulfid (PbS). Obwohl PbS in vielen - auch nichtasbesthältigen - Belägen heute eingesetzt wird, versucht man bei Neuentwicklungen Bleisulfid durch andere Gleitmittel zu ersetzen.

Ein weiteres durch Bleisulfid nicht gelöstes Problem ist die verlangte weitgehende Konstanz des Reibwertes bei Temperaturerhöhung (kein Fading) und die damit auch zusammenhängende möglichst gute Rückstellung des Reibwertes nach Temperaturbelastung (Recovery).

Auf der Bremsscheibe soll sich kein Belag bilden und dabei der Verschleiß der Bremsscheibe nicht zu hoch werden. Dabei scheint auch der Einbau von Mangan in die Metalloberfläche der Scheibe eine Rolle zu spielen.

Gegenstand der Erfindung ist demgemäß eine harzgebundene Reibbelagmischung mit einem Festschmierstoffzusatz der ganz oder teilweise aus Mangan-II-sulfid (MnS) besteht.

Insbesondere enthält er keine Bleiverbindung als funktionelles Additiv. Das Mangan-II-sulfid kommt mineralisch vor, kann aber auch synthetisch hergestellt werden. Bevorzugt und am leichtesten herstellbar ist das Mangan-II-sulfid durch Fällung aus manganhältigen Lösungen mit Schwefelwasserstoff, Natriumsulfid oder ähnlichem. Normalerweise fällt bei einer solchen Fällung vorerst die instabile rosa Modifikation des Mangansulfids an. Durch bekannte Modifikationen der Fällbedingungen, z.B. Fällen aus ammoniakalischer Lösung, kann sofort die stabile grüne Modifikation gewonnen werden.

In Abhängigkeit von der Basisformulierung des Reibbelags kann Mangansulfid entweder alleine oder gemeinsam mit Festschmierstoffen und anderen funktionellen Reibadditiven, auch in vorhergehender Abmischung mit diesen, eingesetzt werden. Es kommen dabei andere Sulfide, Kohlenstoffträger wie Graphit und Koks, Phosphate sowie verschiedene Oxide in Frage. Auch weiche Metalle können gegebenenfalls eingesezt werden.

Mit Vorteil verwendbare Sulfide sind die Sulfide des Molybdäns, Zinks, Antimons, Kupfers, Eisens, Wolframs, Niobs, Titans. Von den Oxiden werden zur Einstellung des gewünschten Reibwertes bevorzugt Oxide des Aluminiums, Eisens, Chroms, Kupfers, Zinks, Mangans, Antimons, Titans, Molybdäns, Siliciums, Zirkons eingesetzt.

Unter den Phosphaten werden bevorzugt die unlöslichen bzw. schwer löslichen Phosphate des Magnesiums, Kalziums, Bors, Aluminiums, Kupfers, Eisens, Zinks eingesetzt.

In den folgenden Beispielen wird nicht nur gezeigt, daß mit Mangansulfid asbestfreie Bremsbeläge mit sehr guten Gebrauchseigenschaften hergestellt werden können, sondern auch Beläge, die bleisulfidhältigen Belägen durchaus ebenbürtig, wenn nicht sogar überlegen sind:

## Beispiele

Die Prüfung der erfindungsgemäßen Additive erfolgt an ganzen Bremsbelägen, um möglichst praxisnahe Verhältnisse zu schaffen.

### A. Herstellung der Beläge

Die Rohstoffe werden in einem Lödige-Chargenmischer FM 50 17 Minuten lang gemischt.Von dieser Mischung werden der Belaggröße entsprechend ausgewogene Anteile in die Preßform einer Leinweber-Bremsbelag-Laborpresse eingefüllt und dort bei Temperaturen um 150°C gepreßt. Die Belagmasse wird dabei auf die vorher in die Form eingelegte eiserne Rückenplatte des Bremsbelags gepreßt und gleichzeitig mit dieser verklebt.

Nach dem Auskühlen der Beläge werden diese mit einer Zylinderkopfschleifmaschine oberflächlich plan geschliffen, um eine volle Auflage auf die Bremsscheibe beim Test zu gewährleisten. Die so vorbereiteten Rohbeläge werden in einem Heraeus Umlufttrockenschrank bei Temperaturen bis 280°C ausgehärtet.

### B. Prüfung der Beläge

Die Prüfung erfolgt mit einem Reibwertprüfstand RWS 75 der Firma Krauss,wobei Reibwert und das Verschleißverhalten der Beläge und der Bremsscheibe geprüft wird.

Durch eine Einlaufphase mit 100 Bremsungen à 5 Sekunden wird ein guter Kontakt zwischen Bremsbelagoberfläche und Bremsscheibe gewährleistet. Die folgenden Tests werden bei den Basistemperaturen 100°C, 200°C, 300°C und 400°C durchgeführt. Dabei wird durch Andrücken der Bremse zuerst die Basistemperatur erreicht und dann von dieser ausgehend 5 Sekunden gebremst und solange die Bremsscheibe wieder gekühlt, bis die jeweilige Basistemperatur wieder erreicht ist. Dieser Zyklus wird pro Basistemperatur 200 mal hintereinander durchgeführt. Nach diesen jeweils 200 Bremsungen werden die Bremsbeläge entnommen und sowohl bei den Belägen als auch bei der Scheibe der Gewichtsverlust gemessen. Daraus kann der Verschleiß errechnet werden.

Der Anpreßdruck der Bremsbeläge ist 10 N/cm², die während der Bremsung gemessene Stromaufnahme ist die Grundlage für die Berechnung des Reibwertes. Die Auswerteeinheit des Reibwertprüfstands ist so konzipiert, daß der Reibwert mit Hilfe eines Schreibers aufgezeichnet werden kann. Daraus wird dann auch das Fading, die Reibwertdifferenz zwischen 100 und 400°C sowie die Recovery, die Differenz eines am Schluß bei 100°C gemessenen Reibwerts und dem anfänglich bei 100°C gemessenen Wert, bestimmt.

Die Belagverschleißwerte sind der Durchschnitt aus den Werten der beiden in einer Bremse eingesetzten Einzelbelägen.

### Beispiel 1

Folgende Rohstoffe werden wie oben beschrieben gemischt, die Mischung verpreßt und die Beläge geschliffen, ausgehärtet sowie getestet.

|  | Gew. % |
|---|---|
| Steinwolle | 8 |
| Polyarylamid | 2 |
| Glasfaser | 7 |
| Stahlwolle | 8 |
| Messingspäne | 5 |
| Phenolharz | 12 |
| Gummimehl | 4 |
| Baryt | 14 |
| $Ca(OH)_2$ | 5 |
| Eisenoxid | 5 |
| $Al_2O_3$ | 6 |
| $CaSiO_3$ | 3 |
| Graphit | 6 |
| Petrolkoks | 5 |
| MnS | 10 |

Folgende Resultate wurden erhalten:

Gesamtverschleiß des Belags : 24,5 g
Gesamtverschleiß der Scheibe : 21,4 g
Fading ($\mu$ 100 - 400 °C) : 0,01
Recovery ($\mu$ 100 °C vor-nach) : 0,00

Es zeigt sich, daß die Bremswirkung (charakterisiert durch den Reibwert) vor und nach einer Temperaturbelastung von über 400 °C (üblich bei Talfahrten) völlig gleich bleibt und die Wirksamkeit der Bremse auch bei so hohen Temperaturen nur minimal abnimmt.

## Beispiel 2

Es wird wie in Beispiel 1 verfahren, anstelle von MnS werden jedoch 10 % PbS eingesetzt.
Folgende Resultate werden mit den so hergestellten Reibbelägen erhalten:

Gesamtverschleiß des Belags : 24,0 g
Gesamtverschleiß der Scheibe : 29,2 g
Fading : 0,14
Recorvery : 0,08

Hier ist doch ein deutliches Absinken der Bremswirksamkeit zu beobachten. Auch der Scheibenverschleiß ist höher als bei Verwendung von MnS.

## Beispiele 3 - 7

Es wird wie im Beispiel 1 verfahren, jedoch anstelle der dort verwendeten 10 % Mangansulfid folgende Kombinationen eingesetzt:

| Beispiel Gew. | MnS % | $Sb_2S_3$ % | $MnO_2$ % | $MoS_2$ % | ZnS % | $Ca_3(PO_4)_2$ | Belag Verschl. (g) | Scheiben Verschl. (g) | Fading | Recovery |
|---|---|---|---|---|---|---|---|---|---|---|
| 3 | 7 | 3 | / | / | / | / | 23,3 | 25,6 | 0,10 | 0,07 |
| 4 | 7 | / | / | / | 3 | / | 24,5 | 14,6 | 0,08 | 0,05 |
| 5 | 7 | / | 3 | / | / | / | 17,9 | 13,7 | 0,05 | 0,08 |
| 6 | 7 | / | / | 3 | / | / | 21,4 | 18,5 | 0,03 | 0,05 |
| 7 | 7 | / | / | / | 4 | 4 | 23,5 | 19,2 | 0,05 | 0,04 |

(Beispiel 7 enthält keinen Petrolkoks)

## Beispiel 8

Es wurde wie im Beispiel 1 vorgegangen, nur wurde statt der grünen Modifikation des MnS die rosa Modifikation eingesetzt. Es wurden im Rahmen des Meßfehlers praktisch identische Resultate erhalten.

Gesamtverschleiß des Belages:  24,2
Gesamtverschleiß der Scheibe:  20,5
Fading (µ 100 °C - 400 °C) :  0,02
Recovery (µ 100 °C vor-nach):  0,01

EP 0 497 751 B1

**Patentansprüche**

1.  Harzgebundene Reibbelagmischungen mit einem Festschmierstoffzusatz, der ganz oder teilweise aus Mangan-II-sulfid (MnS) besteht.

2.  Reibbelagmischungen nach Anspruch 1, dadurch gekennzeichnet, daß der Festschmierstoffzusatz aus einer Mischung von Mangan-II-sulfid mit einem Sulfid des Molybdäns und/oder des Zinks und/oder des Antimons und/oder des Kupfers und/oder des Eisens und/oder des Wolframs und/oder des Titans besteht.

3.  Reibbelagmischungen nach Anspruch 1 oder 2, dadurch gekennzeichnet, daß der Festschmierstoffzusatz neben Mangan-II-sulfid eines oder mehrere der Oxide des Aluminiums, Eisens, Chroms, Kupfers, Zinks, Mangans, Antimons, Titans, Molybdäns, Siliciums oder Zirkons enthält.

4.  Reibbelagmischungen nach einem der Ansprüche 1 bis 3, dadurch gekennzeichnet, daß der Festschmierstoffzusatz Graphit und/oder Koks enthält.

5.  Reibbelagmischungen nach einem der Ansprüche 1 bis 4, dadurch gekennzeichnet, daß der Festschmierstoffzusatz ein Phosphat, Pyrophosphat oder Polyphosphat des Natriums, Kaliums, Magnesiums, Calziums, Bors, Aluminiums, Kupfers, Zinks oder Eisens enthält.

6.  Reibbelagmischungen nach Anspruch 2, dadurch gekennzeichnet, daß die Mischungen
    20 - 80 Gew % MnS
    20 - 80 Gew % $MoS_2$ oder ZnS oder $FeS_2$
    enthalten.

7.  Reibbelagmischungen nach Anspruch 3, dadurch gekennzeichnet, daß die Mischungen
    20 - 80 Gew % MnS
    0 - 50 Gew % $MoS_2$ oder ZnS oder $FeS_2$
    5 - 20 Gew % $Al_2O_3$ oder CuO oder $Fe_2O_3$ oder $MnO_2$
    enthalten.

8.  Reibbelagmischungen nach Anspruch 4, dadurch gekennzeichnet, daß die Mischungen
    20 - 70 % MnS
    0 - 50 % $MoS_2$ oder ZnS oder $FeS_2$
    5 - 20 % $Al_2O_3$ oder CuO oder $Fe_2O_3$ oder $MnO_2$
    10 - 40 % Graphit und/oder Koks
    enthalten.

9.  Reibbelagmischungen nach Anspruch 5, dadurch gekennzeichnet, daß die Mischungen
    20 - 70 % MnS
    10 - 40 % $MoS_2$ oder ZnS oder $FeS_2$
    5 - 20 % $Al_2O_3$ oder CuO oder $Fe_2O_3$ oder $MnO_2$
    10 - 40 % Graphit und/oder Koks
    10 - 30 % Tricalciumphosphat oder Zinksulfat oder Madrellsches Salz
    enthalten.

10. Reibbelagmischungen nach Anspruch 9, dadurch gekennzeichnet, daß es sich bei dem Mangan-II-sulfid um die "grüne Form" handelt.


**Claims**

1.  Resin-bound friction lining mixtures having a solid lubricant additive consisting entirely or partly of manganous sulphide (Mns).

2.  The friction lining mixtures according to claim 1, characterised in that the solid lubricant additive consists of a mixture of manganous sulphide with a sulphide of molybdenum and/or of zinc and/or of antimony and/or of copper and/or of iron and/or of tungsten and/or of titanium.

3. The friction lining mixtures according to claim 1 or claim 2, characterised in that the solid lubricant additive comprises, apart from manganous sulphide, one or several of the oxides of aluminum, iron, chromium, copper, zinc, manganese, antimony, titanium, molybdenum, silicon or zirconium.

4. The friction lining mixtures according to any of claims 1 to 3, characterised in that the solid lubricant additive comprises graphite and/or coke.

5. The friction lining mixtures according to any of claims 1 to 4, characterised in that the solid lubricant additive comprises a phosphate, pyrophosphate or polyphosphate of sodium, potassium, magnesium, calcium, boron, aluminum, copper, zinc or iron.

6. The friction lining mixtures according to claim 2, characterised in that the mixtures comprise
   20 - 80 % w/w of MnS
   20 - 80 % w/w of $MoS_2$ or ZnS or $FeS_2$.

7. The friction lining mixtures according to claim 3, characterised in that the mixtures contain
   20 - 80 % w/w of MnS
   0 - 50 % w/w of $MoS_2$ or ZnS or $FeS_2$
   5 - 20% w/w of $Al_2O_3$ or CuO or $Fe_2O_3$ or $MnO_2$.

8. The friction lining mixtures according to claim 4, characterised in that the mixtures comprise
   20 - 70 % of MnS
   0 - 50 % of $MoS_2$ or ZnS or $FeS_2$
   5 - 20 % of $Al_2O_3$ or CuO or $Fe_2O_3$ or $MnO_2$
   10 - 40 % of graphite and/or coke.

9. The friction lining mixtures according to claim 5, characterised in that the mixtures comprise
   20 - 70 % of MnS
   10 - 40 % of $MoS_2$ or ZnS or $FeS_2$
   5 - 20 % of $Al_2O_3$ or CuO or $Fe_2O_3$ or $MnO_2$
   10 - 40 % of graphite and/or coke
   10 - 30 % of tricalcium phosphate or zinc sulphate or Madrells salt.

10. The friction lining mixtures according to claim 9, characterised in that the manganous sulphide is in the green form.


## Revendications

1. Mélanges pour garniture de friction liés par résine, ayant un additif solide de lubrification qui consiste complètement ou partiellement en sulphure manganeux (MnS).

2. Mélanges pour garniture de friction selon la revendication 1, caractérisés en ce que l'additif solide de lubrification consiste en un mélange de sulphure manganeux avec un sulphure de molybdène et/ou de zinc et/ou d'antimoine et/ou de cuivre et/ou de fer et/ou de tungstène et/ou de titane.

3. Mélanges pour garniture de friction selon la revendication 1 ou 2, caractérisés en ce que l'additif solide de lubrification contient, en plus de sulphure manganeux, un ou plusieurs des oxydes d'aluminium, de fer, de chrome, de cuivre, de zinc, de manganèse, d'antimoine, de titane, de molybdène, de silicium ou de zircon.

4. Mélanges pour garniture de friction selon l'une des revendications 1 à 3, caractérisés en ce que l'additif solide de lubrification contient du graphite et/ou du coke.

5. Mélanges pour garniture de friction selon l'une des revendications 1 à 4, caractérisés en ce que l'additif solide de lubrification contient un phosphate, un pyrophosphate ou un polyphosphate de sodium, de potassium, de magnésium, de calcium, de bore, d'aluminium, de cuivre, de zinc ou de fer.

6. Mélanges pour garniture de friction selon la revendication 2, caractérisés en ce que les mélanges contiennent

de 20 à 80 % en poids de MnS

de 20 à 80 % en poids de $MoS_2$ ou de ZnS ou de $FeS_2$.

7. Mélanges pour garniture de friction selon la revendication 3, caractérisés en ce que les mélanges contiennent

de 20 à 80 % en poids de MnS

de 0 à 50 % en poids de $MoS_2$ ou de ZnS ou de $FeS_2$

de 5 à 20 % en poids d'$Al_2O_3$ ou de CuO ou de $Fe_2O_3$ ou de $MnO_2$.

8. Mélanges pour garniture de friction selon la revendication 4, caractérisés en ce que les mélanges contiennent

de 20 à 70 % de MnS

de 0 à 50 % de $MoS_2$ ou de ZnS ou de $FeS_2$

de 5 à 20 % d'$Al_2O_3$ ou de CuO ou de $Fe_2O_3$ ou de $MnO_2$

de 10 à 40 % de graphite et/ou de coke.

9. Mélanges pour garniture de friction selon la revendication 5, caractérisés en ce que les mélanges contiennent

de 20 à 70 % de MnS

de 10 à 40 % de $MoS_2$ ou de ZnS ou de $FeS_2$

de 5 à 20 % d'$Al_2O_3$ ou de CuO ou de $Fe_2O_3$ ou de $MnO_2$

de 10 à 40 % de graphite et/ou de coke

de 10 à 30 % de phosphate tricalcique ou de sulfate de zinc ou de sel Madrell.

10. Mélanges pour garniture de friction selon la revendication 9, caractérisés en ce que le sulphure manganeux est sous forme verte.